# EUROPEAN PATENT APPLICATION

(11) **EP 1 598 809 A1**
(43) Date of publication of application: **23.11.2005**
(21) Application number: 04704725.3
(22) Date of filing: 23.01.2004
(51) Int. Cl.: G10K 11/16

(54) **SOUND-ABSORBING STRUCTURE BODY**

(30) Priority: 24.02.2003 JP 2003045483
(71) Applicant: KABUSHIKI KAISHA KOBE SEIKO SHO, Kobe-shi, Hyogo 651-8585 (JP)
(72) Inventor: YAMAGUCHI, Zenzo, Kobe Steel Ltd., Kobe-shi, Hyogo 651-2271 (JP); YAMAGIWA, Ichiro, Kobe Steel Ltd., Kobe-shi, Hyogo 651-2271 (JP); TANAKA, Toshimitsu, Kobe Steel Ltd., Kobe-shi, Hyogo 651-2271 (JP); UEDA, Hiroki, Kobe Steel Ltd., Kobe-shi, Hyogo 651-2271 (JP)
(74) Representative: Bailey, David Martin
(86) International application number: PCT/JP2004/000598
(87) International publication number: WO 2004/075164

(57) **Abstract**

A sound-absorbing structure body according to the present invention comprises a ridge-groove board (11) formed with a large number of ridges and grooves, a closing board (15) joined to the ridge-groove board so as to close one side of the ridge-groove board and thereby form a hollow portion (13), a partition board (21) for partitioning the hollow portion (13) into two or more partitioned spaces (22a, 22b), and two or more holes (25a, 25b) opened in the ridge-groove board so as to bring into communication with each of the two or more partitioned spaces (22a, 22b).

## Description

### TECHNICAL FIELD

The present invention relates to a sound-absorbing structure body comprising a ridge-groove board formed with a large number of ridges and grooves and a closing board joined to the ridge-groove board so as to close one side of the ridge-groove board.

### BACKGROUND ART

Heretofore, a sound-absorbing member for a vehicle has been known in which a perforated board is disposed on a lower surface side of a panel through an air layer and a thickness of the perforated board, a diameter and a pitch of holes and a thickness of the air layer are adjusted to absorb noises in a predetermined frequency range.

Noises in a specific frequency range are effectively absorbed by adjusting the thickness of the perforated board, the diameter and pitch of holes and the thickness of the air layer and by utilizing the Helmholtz's resonance principle.

Since the above conventional technique uses a resonance type sound-absorbing mechanism, there is only one peak frequency and it is difficult to provide two or more peak frequencies.

### DISCLOSURE OF THE INVENTION

It is an object of the present invention to provide a sound-absorbing structure body capable of expanding a sound absorption frequency band.

More specifically, according to the present invention there is provided a sound-absorbing structure body comprising a ridge-groove board formed with a large number of ridges and grooves, a closing board joined to the ridge-groove board so as to close one side of the ridge-groove board and thereby form a hollow portion, a partition board for partitioning the hollow portion into two or more partitioned spaces, and one or more holes opened in the ridge-groove board so as to bring each of the two or more partitioned spaces into communication with an exterior space.

By partitioning the hollow portion into two or more partitioned spaces and forming one or more holes through which each partitioned space communicates with an exterior space in the ridge-groove board, each partitioned space comes to function as a resonance type sound-absorbing mechanism, whereby it is possible to produce a peak frequency with a sound absorption coefficient corresponding to each partitioned space.

For each of the partitioned spaces, by changing the number and diameter of holes and the opening ratio of holes to the ridge-groove board corresponding to the partitioned space, a peak frequency with a sound absorption coefficient corresponding to each partitioned space can be produced. Furthermore, as to the partitioned spaces, partitioning may be done in various forms each having a predetermined internal volume, for example, by disposing horizontally, vertically or obliquely the partition board for partitioning the hollow portion into two or more partitioned spaces.

Preferably, one or more foils are disposed in at least one of two or more partitioned spaces so that the foil(s) can vibrate or can be rubbed.

A sound wave which has reached a partitioned space causes vibration or rubbing of the foil(s) and the sound absorption coefficient of each sound absorption peak frequency increases due to viscosity induced when the sound wave passes between the foils. The foils may be disposed respectively into two or more partitioned spaces or the foil may be disposed selectively into a partitioned space having a predetermined sound absorption peak frequency.

Preferably, the foil(s) has plural through holes.

If the foil(s) has plural through holes, the sound absorption coefficient of each sound-absorbing peak frequency further increases.

Preferably, a porous sound-absorbing material is disposed in at least one of two or more partitioned spaces.

If the porous sound-absorbing material is disposed in the interior of a partitioned space which communicates with an outside air through at least one hole, the sound absorption coefficient of each sound absorption peak frequency increases due to damping of the sound wave caused by the porous sound-absorbing material.

Preferably, the other side of the ridge-groove board is covered with the sound-absorbing material.

The sound-absorbing material on the surface absorbs a high frequency in addition to the peak frequency in the resonance type sound absorption based on hole groups in each partitioned space.

Preferably, a perforated board is disposed on the other side of the ridge-groove board.

Due to a sound absorbing effect attained by the perforated board, the sound absorption frequency band is widened and the sound absorption coefficient near the sound absorption peak frequency is increased.

### BRIEF DESCRIPTION OF THE DRAWING

Fig. 1(a) is an explanatory diagram showing a schematic configuration of a sound-absorbing structure body according to a first embodiment of the present invention;
Fig. 1(b) is an explanatory diagram showing a schematic configuration of the sound-absorbing structure body of the first embodiment;
Fig. 2 is an explanatory diagram showing a schematic configuration of a sound-absorbing structure body according to a second embodiment of the present invention;
Fig. 3 is an explanatory diagram showing a schematic configuration of a sound-absorbing structure body according to a third embodiment of the present invention;
Fig. 4 is an explanatory diagram showing a schematic configuration of a sound-absorbing structure body according to a fourth embodiment of the present invention;

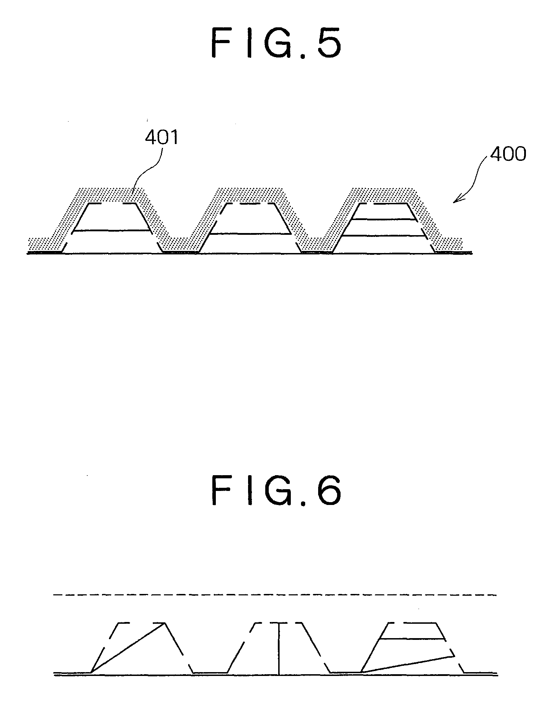

Fig. 5 is an explanatory diagram showing a schematic configuration of a sound-absorbing structure body according to a fifth embodiment of the present invention;
Fig. 6 is an explanatory diagram showing a schematic configuration of a sound-absorbing structure body according to a sixth embodiment of the present invention;
Fig. 7 is a specification diagram of a sample of the sound-absorbing structure body used in the first embodiment;
Fig. 8 is a graph showing a sound absorption coefficient characteristic of the sound-absorbing structure body of the first embodiment;
Fig. 9 is a specification diagram of a sample of the sound-absorbing structure body used in the second embodiment; and

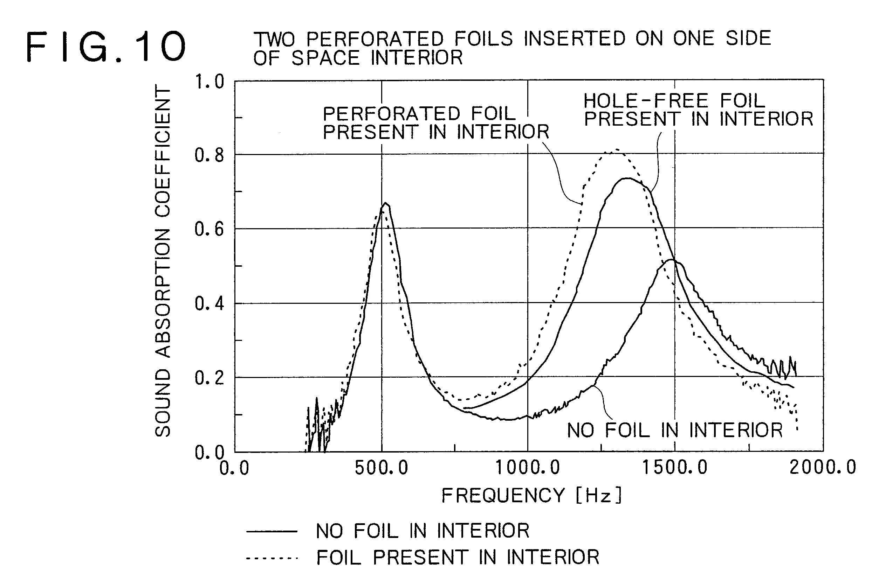

Fig. 10 is a graph showing a sound absorption coefficient characteristic of the sound-absorbing structure body of the second embodiment.

### BEST MODE FOR CARRYING OUT THE INVENTION

### [First Embodiment]

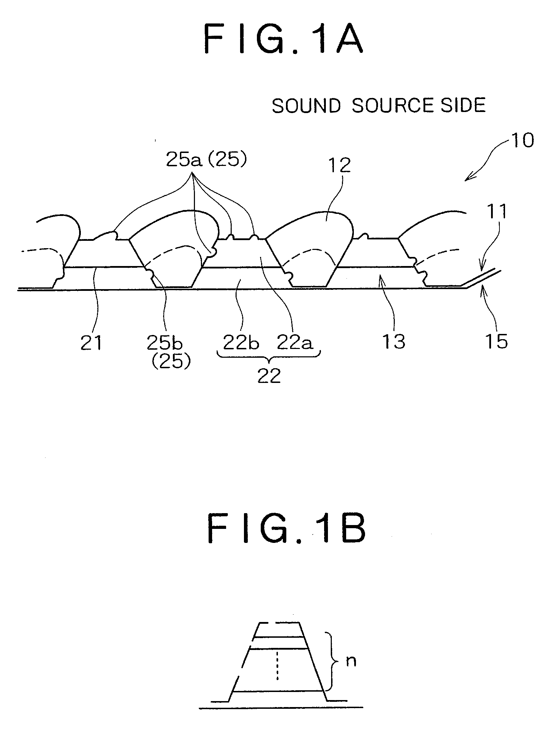

Figs. 1(a) and 1(b) are explanatory diagrams each showing a schematic configuration of a sound-absorbing structure body according to a first embodiment of the present invention.

In Fig. 1(a), a sound-absorbing structure body 10 is basically constituted by a laminated structure body comprising a ridge-groove board 11 formed with a large number of independent grooves 12 and a closing board 15 which is joined to the ridge-groove board 11 so as to form a hollow portion 13 between adjacent grooves (anti-sound source side of the ridges).

In the laminated structure body are provided a partition board 21 for partitioning the hollow portion 13 into two or more partitioned spaces 22 and hole groups 25 which are opened in the ridge-groove board 11 so as to communicate with each of the two or more partitioned spaces 22.

The ridge-groove board 11 comprises a large number of cone (truncated cone)-shaped grooves 12. The grooves 12 may be not only in such a truncated cone shape as shown in the drawing but also for example in a semispherical shape, a rod shape of a semicircular section, or a boat shape. Further, the grooves 12 may be arranged in any various forms, including checkerboard, lattice and zigzag forms.

By superimposing the closing board 15 which is flat onto the back sides of the bottoms of the grooves 12, there are formed hollow portions 13 spreading around the grooves 12. With the closing board 15 disposed on the back sides of the grooves 12, it is possible to form intercommunicating wide hollow portions 13 around the grooves 12. Surroundings of the laminated structure body comprising the ridge-groove board 11 and the closing board 15 are closed by suitable means. For forming the grooves 12, a metallic board such as an aluminum or iron board is used as the ridge-groove board 11. As the closing board 15 there used, for example, a metallic board such as an aluminum or iron board or a resin or wooden board. Suitable connecting means, e.g., bonding, welding, or screwing, is adopted for connection of the closing board 15 to the bottoms of the grooves 12 in the ridge-groove board 11.

It is the partition board 21 that partitions each hollow portion 13 vertically into two stages of a first partitioned space 22a and a second partitioned space 22b. The partition board 21 is a perforated board having a large number of holes in which the grooves 12 are closely fitted. As the partition board, it is preferable to use a metallic board such as an aluminum or iron board which can be joined to the ridge-groove board 11 by spot welding. However, a resin board may be bonded to the ridge-groove board 11.

The first partitioned space 22a is in communication with an exterior space on the sound source side through a first hole group 25a comprising a large number of holes which are opened to a sound source-side surface of the ridge-groove board 11 and a large number of holes which are opened to side surfaces of the grooves 12. The second partitioned space 22b is in communication with the exterior space on the sound source side through a second hole group 25b comprising a large number of holes which are opened to side surfaces of the grooves 12.

The first partitioned space 22a and the first hole group 25a constitute a first resonance type sound absorber which exhibits a predetermined sound absorption coefficient at a predetermined frequency, while the second partitioned space 22b and the second hole group 25b constitute a second resonance type sound absorber which exhibits a predetermined sound absorption coefficient at a predetermined frequency. Two sound absorption peaks can be provided by the first and second sound resonance type absorbers and a required sound absorption coefficient band can be widened by adjusting the two peak frequencies.

Two partition boards parallel to the closing board 15 may be provided so as to partition space between the ridge-groove board 11 and the closing board 15 into three stages of first, second and third partitioned spaces. In this case, there are formed first, second and third hole groups corresponding to the first, second and third partitioned spaces, respectively, whereby three sound absorption peaks can be provided. Thus, a required sound absorption coefficient band can be widened by adjusting the three peak frequencies.

N number of peaks which exhibit a desired sound absorption coefficient at a predetermined frequency can be obtained by forming n number of partitioned spaces as in Fig. 1(b) and by suitably selecting one, or one combination or more, of the number of holes formed in each partitioned space, a diameter thereof, an opening ratio of holes, a thickness of the ridge-groove board, and volume or size of each partitioned space.

According to the first embodiment, as described above, there is attained an effect that plural sound absorption peaks can be provided despite the laminated structure body comprising the ridge-groove board 11 and the closing board 15.

### [Second Embodiment]

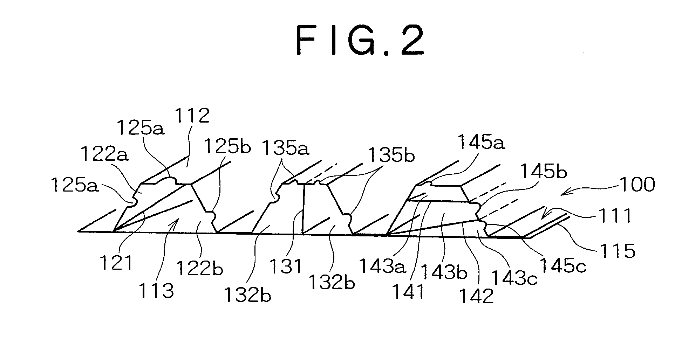

Next, a sound-absorbing structure 100 according to a second embodiment of the present invention will be described below with reference to Fig. 2.

The sound-absorbing structure body 100 is basically constituted by a laminated structure body comprising a ridge-groove board 111 having alternate ridges 112 and grooves and a closing board 115 joined to the bottoms of the grooves so as to form a hollow portion 113 within each of the ridges 112. In this laminated structure body there are provided partition boards 121, 131, 141, 142 each for partitioning each hollow portion 113 into two or more partitioned spaces and two or more hole groups 125a, 125b, 135a, 135b, 145a, 145b, 145c which are opened to the surface of the ridge-groove board 111 so as to communicate with two or more partitioned spaces 122a, 122b, 132a, 132b, 143a, 143b, 143c.

In the left ridge 112 shown in Fig. 2, a partition board 121 is disposed obliquely in a diagonal form to partition the hollow portion 113 into two partitioned spaces 122a and 122b of a triangular section, and a first hole group 125a communicating with the partitioned spaces 122a and 122b are formed.

In the central ridge 112 shown in Fig. 2, a partition board 131 perpendicular to the center of the ridge 112 is disposed to partition the hollow portion 113 into left and right partitioned spaces 132a, 132b, and first hole groups 135a and 135b communicating with the partitioned spaces 132a and 132b, respectively, are formed.

In the right ridge 112 shown in Fig. 2, a first partition board 141 parallel to the closing board 115 and a second partition board 142 which is oblique relative to the closing board 115 are disposed to partition the hollow portion 113 into three vertical stages of partitioned spaces 143a, 143b and 143c, and first group holes 145a, 145b and 145c communicating with the partitioned spaces 143a, 143b and 143c, respectively, are formed.

Although in Fig. 2 the hollow portions 113 in the three ridges 112 are partitioned in three different forms, there may be adopted any one of those partitioning forms.
As the number of partitioning forms increases, it becomes possible to shift the sound absorption peak frequency accordingly.

### [Third Embodiment]

Next, a sound-absorbing structure body 200 according to a third embodiment of the present invention will be described below.

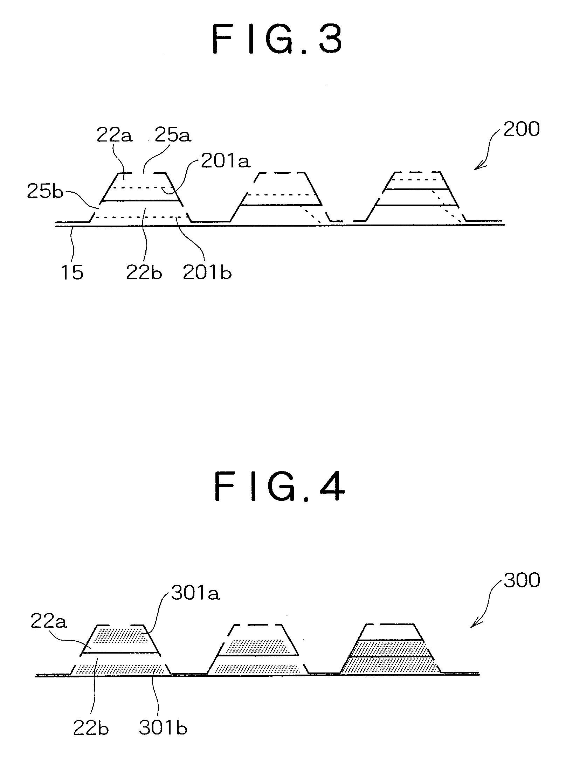

In the sound-absorbing structure body 200, foils 201a and 201b are added into the partitioned space 22a used in the sound-absorbing structure of the first embodiment. As shown in the left-hand hollow portion in Fig. 3, a first perforated foil 201a is fitted into the first partitioned space in parallel with the closing board 15, making it possible for the first foil 201a to vibrate or be rubbed with air passing into and out of the first hole group 25a. Into the second partitioned space is fitted a second perforated foil 201b in parallel with the closing board 15, making it possible for the second foil 201b to vibrate or be rubbed with air passing into and out of the second hole group 25b.

As each of the foils 201a and 201b, there may be used a mere foil, foil formed in a ridge-groove shape, foil formed in a folded shape, or foil having plural through holes. Particularly, the foil having plural through holes is advantageous in that not only the configuration is simple but also the sound absorption coefficient of each sound absorption peak frequency further increases with a sound wave passing through the through holes formed in the foil.

As shown in the central hollow portion in Fig. 3, the second foil may be obliquely inserted so as to confront the second hole group 25b. Thus, in various forms one or more sheets of foil can be inserted into one or more partitioned spaces. The sound absorption coefficient of each sound absorption peak frequency increases as a result of vibration or rubbing of the foil.

### [Fourth Embodiment]

Next, a sound-absorbing structure body 300 according to a fourth embodiment of the present invention will be described below.

In the sound-absorbing structure body 300, porous sound-absorbing materials 301a and 301b are added into an interior space of the sound-absorbing structure body of the first embodiment. As shown in the left-hand hollow portion in Fig. 4, a porous sound-absorbing material 301a is fitted into an upper portion of the first partitioned space 22a and a perforated sound-absorbing material 301b is fitted into a lower portion of the second partitioned space 22b. As to in what form the porous sound-absorbing materials are to be fitted into the partitioned spaces, various forms are available, including those shown in the central hollow portion and the right-hand hollow portion in Fig. 4. As the porous sound-absorbing materials 301a and 301b, there is used a fibrous sound-absorbing material such as glass wool, a metallic fiber such as aluminum or stainless steel, a compressed product of a paper strip-like metal, non-woven cloth, or a metallic or resinous foam. As to the shape of the sound-absorbing materials, there may be used any of various shapes, including a plate-like shape. With the sound-absorbing materials 301a and 301b inserted into a partitioned space, the sound absorption coefficient of a sound absorption peak frequency increases as a result of damping of a sound wave by the sound-absorbing materials.

### [Fifth Embodiment]

Next, a sound-absorbing structure body 400 according to a fifth embodiment of the present invention will be described below.

In the sound-absorbing structure body 400, the sound source-side surface of the sound-absorbing structure body of the first embodiment is covered with a sound-absorbing material 401. As the sound-absorbing material, there may be used any of various sound-absorbing materials in addition to the porous sound-absorbing materials described above.
It is possible to effect sound absorption for high frequencies other than the resonance type sound absorption peak frequency.

### [Sixth Embodiment]

Next, a sound-absorbing structure body 500 according to a sixth embodiment of the present invention will be described below.

In the sound-absorbing structure body 500, a perforated board 501 is disposed at intervals of a predetermined distance on the sound source-side surface of the sound-absorbing structure of the second embodiment. The perforated board 501 brings about a sound absorbing effect of widening the sound absorption frequency band and thereby increasing the sound absorption coefficient.

The present invention is described in the above preferred embodiments, but is not limited thereto. It will be understood that various other embodiments not departing from the spirit and scope of the present invention can be adopted.

For example, a sound-absorbing structure body can be provided wherein a closing board is attached to the bottoms of ridges of a ridge-groove board having a large number of such ridges whose interiors are hollow, the hollow portions are partitioned into two or more partitioned spaces by a partition board, and one or more holes opened in the ridge-groove board are formed so as to communicate with each of the partitioned spaces. In this case, it is possible to form a large number of independent hollow portions within the ridges and to partition each of the hollow portions into various forms.

### [Example 1]

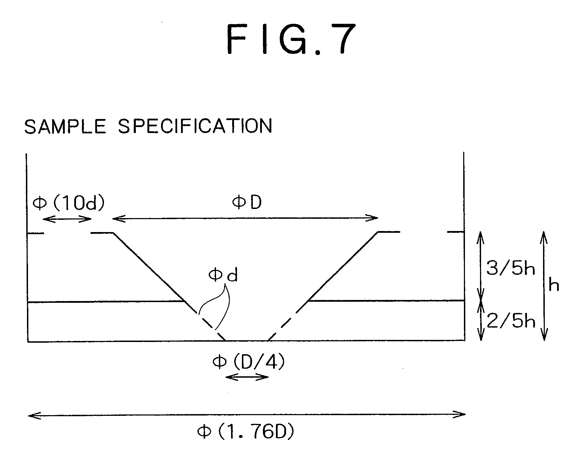

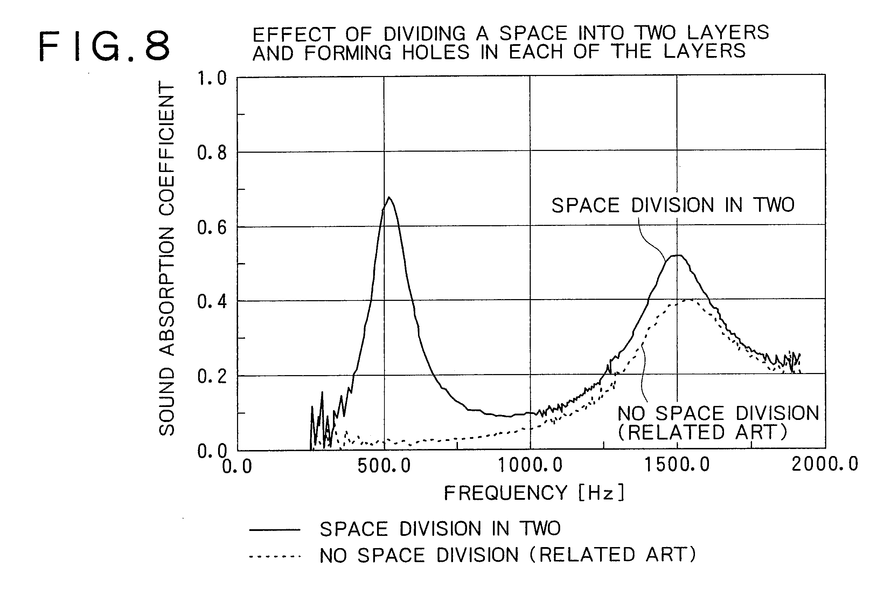

Simulation was performed with respect to a sound absorption characteristic of a sample of the sound-absorbing structure body shown in Fig. 1, the sample having such various factors as shown in Fig. 7, results of which are shown in Fig. 8. In case of dividing a hollow portion in two, a large sound absorption peak can be developed in a low frequency range as compared with the case where the hollow portion is not divided.

### [Example 2]

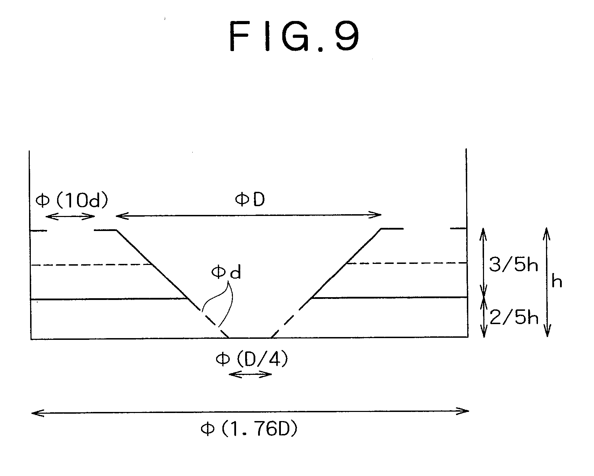

Simulation was performed with respect to a sound absorption characteristic of a sample of the sound-absorbing structure body shown in Fig. 3, the sample having such various factors as shown in Fig. 9. In case of inserting a mere aluminum foil into a hollow portion, it is possible to increase the sound absorption coefficient of a sound absorption peak in a high frequency range. In case of inserting an aluminum foil having a large number of through holes into a hollow portion, the sound absorption coefficient of the sound absorption peak in the high frequency range can be further increased.

## Claims

1. A sound-absorbing structure body comprising a ridge-groove board formed with a large number of ridges and grooves, a closing board joined to said ridge-groove board so as to close one side of said ridge-groove board and thereby form a hollow portion, a partition board for partitioning said hollow portion into two or more partitioned spaces, and one or more holes opened in said ridge-groove board so as to bring each of said two or more partitioned spaces into communication with an exterior space.

2. The sound-absorbing structure body according to claim 1, wherein one or more foils are disposed in at least one of said two or more partitioned spaces so that the foil(s) can vibrate or can be rubbed.

3. The sound-absorbing structure body according to claim 2, wherein said foil(s) has (have) a plurality of through holes.

4. The sound-absorbing structure body according to claim 1, wherein a porous sound-absorbing material is disposed in at least one of said two or more partitioned spaces.

5. The sound-absorbing structure body according to claim 1, wherein the other side of said ridge-groove board is covered with a sound-absorbing material.

6. The sound-absorbing structure body according to claim 1, wherein a perforated board is disposed on the other side of said ridge-groove board.
